# EUROPEAN PATENT APPLICATION

(11) **EP 4 806 267 A1**
(43) Date of publication of application: **16.09.2026**
(21) Application number: 25168854.5
(22) Date of filing: 07.04.2025
(51) Int. Cl.: A01N 37/28, A01P 1/00, A01P 3/00, A01N 37/02

(54) **ANTIMICROBIAL COMPOSITIONS, STABILIZED COMPOSITIONS THEREOF, AND APPLICATIONS THEREOF IN PRODUCT FORMULATIONS**

(30) Priority: 14.03.2025 US 202563771925 P
(71) Applicant: LANXESS Corporation, Pittsburgh, PA 15275-1112 (US)
(72) Inventor: LI, Ziang, Newark, 19711 (US)
(74) Representative: Herbold, Matthias

(57) **Abstract**

The present disclosure provides antimicrobial compositions containing at least one saturated straight-chain fatty acid having a carbon chain length of from 6 to 12 carbon atoms and/or a salt thereof, at least one alkylhydroxamic acid and/or a salt thereof, and a solvent each in the amounts described herein. Also disclosed are stabilized antimicrobial compositions containing such materials, and the application of such antimicrobial compositions to product formulations.

## Description

### FIELD OF INVENTION

The present invention relates to antimicrobial compositions containing a combination of certain fatty acids and alkylhydroxamic acids and the application of such antimicrobial compositions to product formulations, and further relates to stabilized antimicrobial compositions containing the fatty acid and alkylhydroxamic acid materials.

### BACKGROUND OF THE INVENTION

Preservation against microbial contamination of product formulations, such as personal care products (e.g., cosmetic products) and home care products, plays a pivotal role in consumer safety, product stability, integrity, and quality assurance, regulatory compliance, sustainability, among other factors. There is increasing consumer demand and a need for preservative systems that can reduce reliance on traditional preservatives in favor of naturally-derived ingredients, particularly ingredients that can provide multifunctional benefits to end product formulations.

In accordance with the present disclosure, it was discovered that an antimicrobial composition containing, in the amounts described herein, a combination of at least one alkylhydroxamic acid and/or a salt thereof and at least one saturated straight-chain fatty acid having a carbon chain length of from 6 to 12 carbon atoms and/or a salt thereof in a solvent for such materials can provide multifunctional benefits to product formulations, including highly effective antimicrobial properties even in the absence of preservatives (such as phenoxyethanol).

### SUMMARY OF INVENTION

The present disclosure provides an antimicrobial composition comprising (a) from about 2 to about 15 wt% of at least one alkylhydroxamic acid and/or a salt thereof; (b) from about 20 to about 70 wt% of at least one saturated straight-chain fatty acid having a carbon chain length of from 6 to 12 carbon atoms and/or a salt thereof; (c) from about 20 to about 70 wt% of at least one solvent; and optionally (d) from 0 to about 20 wt% of water or at least one alkaline stabilizer.

Also provided is a method of preparing an antimicrobial composition comprising combining (a) at least one alkylhydroxamic acid and/or a salt thereof in an amount of from about 2 to about 15 wt%; (b) at least one saturated straight-chain fatty acid having a carbon chain length of from 6 to 12 carbon atoms and/or a salt thereof in an amount of from about 20 to about 70 wt%; (c) at least one solvent in an amount of from about 20 to about 70 wt%; and optionally (d) water or at least one alkaline stabilizer in an amount of from 0 to about 20 wt%.

Also provided is an aqueous product formulation comprising an antimicrobial effective amount of an antimicrobial composition in accordance with the present disclosure.

Further provided is a personal care or home care product formulation comprising an antimicrobial effective amount of an antimicrobial composition in accordance with the present disclosure.

In addition, the present disclosure includes a method of controlling microbial growth in or preserving a product formulation, comprising adding to the product formulation an antimicrobial effective amount of the antimicrobial composition according to the present disclosure.

### DETAILED DESCRIPTION

Unless otherwise specified, the following terms are defined as follows:
As used herein, "formulation" refers to a preparation that is to be preserved or provided with antimicrobial activity using the antimicrobial composition of the present disclosure.

As used herein, an "antimicrobial effective amount" means an amount to provide a desired antimicrobial effect or activity, such as a desired preservative, antibacterial and/or antifungal effect.

As used herein, "microorganism" includes, for example, bacteria and fungi, including yeast and mold.

pH values or ranges as provided herein refer to pH at room temperature (20-25 °C), unless otherwise specified.

All weight percentages (wt%) disclosed herein are based on the total weight of the composition or formulation, unless otherwise indicated.

The antimicrobial composition of the present disclosure comprises (a) from about 2 to about 15 wt%, preferably from about 3.5 to about 13 wt%, more preferably from about 4.5 wt% or from about 5 wt% to about 12.5 wt% or to about 10 wt%, of at least one alkylhydroxamic acid and/or a salt thereof; (b) from about 20 to about 70 wt%, preferably from about 30 to about 65 wt%, more preferably from about 35 wt% or from about 40 wt% to about 60 wt%, to about 55 wt%, to about 50 wt% or to about 45 wt%, of at least one saturated straight-chain fatty acid having a carbon chain length of from 6 to 12 carbon atoms and/or a salt thereof; and (c) from about 20 to about 70 wt%, preferably from about 25 to about 60 wt%, more preferably from about 25 wt% or from about 30 wt% to about 55 wt%, to about 50 wt%, to about 45 wt% or to about 40 wt%, of at least one solvent. Preferably, the antimicrobial composition comprises the at least one alkylhydroxamic acid and/or a salt thereof (a) and the at least one saturated straight-chain fatty acid and/or a salt thereof (b) in a weight ratio of (a) to (b) of from about 1:1.5 to about 1:15, preferably from about 1:2 to about 1:12, more preferably from about 1:2.5, from about 1:3 or from about 1:4 to about 1:10, to about 1:8 or to about 1:6.

In general, the alkylhydroxamic acids of the present disclosure have a linear or branched carbon chain preferably having from 2 to 22 carbon atoms, more preferably from 6 to 12 carbon atoms. The carbon chains may include double bonds, i.e., areas of unsaturation and may also have functionality using substituted groups (e.g., hydroxyl group(s)) depending on the desired end use and properties. The antimicrobial composition may comprise one or more salts of alkylhydroxamic acids, such as those where the cations of the alkylhydroxamic acid salts are chosen from Li⁺, Na⁺, K⁺, Mg²⁺, Ca²⁺, Al³⁺, NH₄⁺, primary ammonium ions, secondary ammonium ions, tertiary ammonium ions and quaternary ammonium ions, e.g., caprylhydroxamic acid sodium salt, caprylhydroxamic acid potassium salt, caprylhydroxamic acid ammonium salt, etc.

Preferred alkylhydroxamic acids include those having an alkyl group of a chain length of from 2 to 22 carbon atoms, which may be branched or linear in structure, substituted (e.g., hydroxy, alkoxy and the like) or unsubstituted, and saturated or unsaturated (e.g., alkenyl, alkenoxy, alkynyl, alkynoxy and the like). For example, the carbon chains may be interrupted by one or more oxygen atoms and/or may contain one or more side- and/or terminal-hydroxyl group substituents. Other functional groups, particularly groups compatible with or suggested for use in personal care (e.g., cosmetics), health care (e.g., pharmaceutical) or home care formulations, may be used. Preferably, the alkylhydroxamic acid contains an alkyl group having a chain length of 6 to 12 carbon atoms. Examples of suitable alkylhydroxamic acids include hexanohydroxamic acid (six-carbon chain), caprylhydroxamic acid (eight-carbon chain), decanohydroxamic acid (10-carbon chain), laurohydroxamic acid (12-carbon chain) and combinations thereof.

Preferred alkylhydroxamic acids are of the formula (I) or a salt thereof: 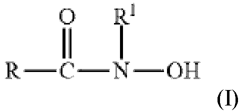 wherein R is a linear or branched, substituted or unsubstituted, carbon chain of from 2 to 22 carbon atoms, preferably from 6 to 12 carbon atoms, which chain may be interrupted by one or more oxygen atoms, and may include saturated or unsaturated carbon bonds. R groups may include, for example, alkyl, alkenyl, alkynyl, alkoxy, alkenoxy, alkynoxy and similar groups, are branched or linear, and which groups may be further functionalized using substituted groups, including hydroxy or other groups, such as acceptable for personal care (e.g., cosmetically acceptable), health care (e.g., pharmaceutically acceptable) or home care formulations and compatible with such end applications. R¹ may be hydrogen or R, preferably hydrogen.

The at least one alkylhydroxamic acid more preferably comprises caprylhydroxamic acid. While the alkylhydroxamic acid may consist essentially of or consist of one alkylhydroxamic acid (e.g., caprylhydroxamic acid), more than one alkylhydroxamic acid may be used.

The alkylhydroxamic acids may be derived, e.g., from natural oils and are commercially available or may be synthesized by techniques known or to be developed in the art.

Fatty acids of the present disclosure are known to occur naturally and can be derived from plant oils, among other extraction or production processes. Preferably, the at least one fatty acid (and/or salt thereof) has a carbon chain length of from 8 to 10 carbon atoms. The fatty acid (and/or salt thereof) of the present disclosure can be essentially a single saturated, straight-chain fatty acid (and/or salt thereof) having a carbon chain length of from 6 to 12, preferably from 8 to 10, carbon atoms or can be any mixture of saturated straight-chain fatty acids (and/or salts thereof) having carbon chain lengths within the range of from 6 to 12, preferably from 8 to 10, carbon atoms. For example, the at least one fatty acid and/or salt thereof may be caproic acid and/or a salt thereof, heptanoic acid and/or a salt thereof, caprylic acid and/or a salt thereof, pelargonic acid and/or a salt thereof, capric acid and/or a salt thereof or any combination thereof. More preferably, the fatty acid and/or salt thereof is caprylic acid and/or a salt thereof, pelargonic acid and/or a salt thereof, capric acid and/or a salt thereof, or any combination thereof. In preferred embodiments, the fatty acid and/or salt thereof is caprylic acid and/or a salt thereof, pelargonic acid and/or a salt thereof, or any combination thereof. Examples of suitable salts of the fatty acids include, but are not limited to, alkali salts, such as sodium and potassium, and ammonium salts.

The solvent component (c) is a solvent for at least the alkylhydroxamic acid of the presently disclosed compositions and may further be chosen according to its compatibility or suitability for a desired end application or end product formulation, e.g., in a personal care formulation (e.g., a cosmetically acceptable solvent), health care formulation (e.g., pharmaceutically acceptable solvent) or a home care formulation. Suitable solvents include, but are not limited to, alcohols, ethers, and esters. The alcohols are preferably diols, e.g., glycols. Preferably, the ethers are hydroxyl-containing ethers, such as glyceryl ethers, more preferably glyceryl monoethers. The esters are preferably hydroxyl-containing esters, such as glyceryl esters, more preferably glyceryl monoesters. Examples of the foregoing solvents include, but are not limited to, ethylhexylglycerin, propanediol, methylpropanediol, 1,2-hexanediol, 1,2-pentanediol, 1,2-decanediol, caprylyl glyceryl ether, caprylyl glycol, propylene glycol, butylene glycol, pentylene glycol, hexylene glycol, glyceryl monolaurate, glyceryl monocaprate, glyceryl monocaprylate, and any combination thereof. Preferably, the solvent is chosen from C₃-C₈ diols, more preferably C₅-C₆ diols, such as pentylene glycol, hexylene glycol, 1,2-hexanediol and any combination thereof.

The antimicrobial composition may further comprise (d) from 0 to about 20 wt% of water or at least one alkaline stabilizer, preferably in an amount of from about 2 wt% or from about 5 wt% to about 20 wt%, more preferably from about 5 wt%, from about 7.5 wt% or from about 10 wt% to about 17.5 wt% or to about 15 wt%. In embodiments of the antimicrobial composition comprising the at least one alkaline stabilizer, the antimicrobial composition preferably has a pH of from about 5 to about 7.5, such as from about 5.5 or from about 6.0 to about 7.5, to about 7.0 or to about 6.5. The alkaline stabilizer comprises a base preferably chosen from a metal (preferably an alkali metal or alkaline earth metal) hydroxide, oxide, carbonate, bicarbonate, phosphate, or hydride, an amine base or a combination thereof, more preferably a metal hydroxide. The metals are preferably chosen from sodium, potassium, magnesium and calcium. In many preferred embodiments, the alkaline stabilizer comprises sodium hydroxide, potassium hydroxide or a combination thereof. In particular, the alkaline stabilizer may be chosen to ensure compatibility or suitability for a desired end application or end product formulation (e.g., cosmetically or pharmaceutically acceptable). The antimicrobial composition may comprise the base of the alkaline stabilizer in an amount, for example, of from about 0.1 wt%, from about 0.3 wt%, preferably from about 0.5 wt%, more preferably from about 1 wt% or from about 2 wt% to about 10 wt%, preferably to about 8 wt%, to about 6 wt%, or to about 4.5 wt%, based on the total weight of the antimicrobial composition. Typically, the alkaline stabilizer is in the form of an alkaline solution, preferably an alkaline aqueous solution. For example, the alkaline stabilizer may be an alkaline solution, such as a metal hydroxide solution (e.g., where the metal hydroxide is potassium hydroxide, sodium hydroxide or a combination thereof), and may have a strength of the base component in the solution of from about 1% to about 90%, to about 80%, to about 70% or to about 60% (w/w), preferably from about 10%, from about 20% or from about 30% to about 70%, to about 60% or to about 50% (w/w). Higher strength alkaline solutions may also be used. Preferably, the alkaline stabilizer has a pH ranging from about 9.0, more preferably from about 10.0 to about 14.0, such as from about 11.0 or from about 12.0 to about 14.0 or to about 13.0.

Preferably, the antimicrobial composition is free or substantially free of parabens. Preferably, the antimicrobial composition is free or substantially free of formaldehyde donors. Preferably, the antimicrobial composition is free or substantially free of isothiazolinones. Preferably, the antimicrobial composition is free or substantially free of iodopropynyl butyl carbamate (IPBC). Preferably, the antimicrobial composition is free or substantially free of phenoxyethanol. Preferably, the antimicrobial composition is free or substantially free of benzyl alcohol. Preferably, the antimicrobial composition is free or substantially free of benzoic acid and salts thereof, such as sodium benzoate. Preferably, the antimicrobial composition is free or substantially free of parabens, formaldehyde donors, isothiazolinones, IPBC, phenoxyethanol, benzyl alcohol and benzoic acid and salts of benzoic acid (such as sodium benzoate). Preferably, the antimicrobial composition is free or substantially free of traditional preservative materials. In preferred embodiments, the antimicrobial composition is free or substantially free of any additional antimicrobial materials.

The antimicrobial composition may further comprise one or more excipients or additives, typically in minor quantities, such as up to about 10 wt% or up to about 5 wt%. Such excipients or additives may be chosen according to their compatibility or suitability for a desired end application or end product formulation (e.g., a cosmetically or pharmaceutically acceptable excipient). Examples include, but are not limited to, dispersants, solubilizers, buffers, and/or stabilizers (other than the alkaline stabilizer (d)).

In many embodiments, the antimicrobial composition consists essentially of, or in further embodiments consists of, the at least one alkylhydroxamic acid and/or salt thereof (a), the at least one fatty acid and/or salt thereof (b), the at least one solvent (c), and optionally water or the at least one alkaline stabilizer (d). In further embodiments, the antimicrobial composition consists essentially of, or in further embodiments consists of, the at least one alkylhydroxamic acid and/or salt thereof (a), the at least one fatty acid and/or salt thereof (b), the at least one solvent (c), optionally water or the at least one alkaline stabilizer (d), and optionally at least one excipient or additive. In further embodiments, the antimicrobial composition consists essentially of, or in further embodiments consists of, the at least one alkylhydroxamic acid and/or salt thereof (a), the at least one fatty acid and/or salt thereof (b), the at least one solvent (c), optionally water or the at least one alkaline stabilizer (d), optionally at least one additional antimicrobial material and optionally at least one excipient or additive.

Also disclosed is a method of preparing an antimicrobial composition comprising combining (a) at least one alkylhydroxamic acid and/or a salt thereof in an amount of from about 2 to about 15 wt%, preferably from about 3.5 to about 13 wt%, more preferably from about 4.5 wt% or from about 5 wt% to about 12.5 wt% or to about 10 wt%; (b) at least one saturated straight-chain fatty acid having a carbon chain length of from 6 to 12 carbon atoms and/or a salt thereof in an amount of from about 20 to about 70 wt%, preferably from about 30 to about 65 wt%, more preferably from about 35 wt% or from about 40 wt% to about 60 wt%, to about 55 wt%, to about 50 wt% or to about 45 wt%; (c) at least one solvent in an amount of from about 20 to about 70 wt%, preferably from about 25 to about 60 wt%, more preferably from about 25 wt% or from about 30 wt% to about 55 wt%, to about 50 wt%, to about 45 wt% or to about 40 wt%; and optionally (d) water or at least one alkaline stabilizer in an amount of from 0 to about 20 wt%, preferably in an amount from about 2 wt% or from about 5 wt% to about 20 wt%, more preferably from about 5 wt%, from about 7.5 wt% or from about 10 wt% to about 17.5 wt% or to about 15 wt%. In embodiments where the antimicrobial composition is prepared with the at least one alkaline stabilizer, the antimicrobial composition preferably has a pH of from about 5.0 to about 7.5, such as from about 5.5 or from about 6.0 to about 7.5, to about 7.0 or to about 6.5. Preferably, the at least one alkylhydroxamic acid and/or a salt thereof (a) and the at least one saturated straight-chain fatty acid and/or a salt thereof (b) are combined in a weight ratio of (a) to (b) of from about 1:1.5 to about 1:15, preferably from about 1:2 to about 1:12, more preferably from about 1:2.5, from about 1:3 or from about 1:4 to about 1:10, to about 1:8 or to about 1:6. Exemplary embodiments of the components (a), (b), (c) and (d) are as described above.

The present disclosure is not limited to any particular technique for preparing the antimicrobial composition and such composition may be prepared in any suitable manner for combining or mixing the components described herein.

The present disclosure provides for the use of an antimicrobial effective amount of the presently disclosed antimicrobial compositions in a wide range of product formulations and applications, such as for use in personal care (e.g., cosmetic), home care, health care (such as pharmaceutical (i.e., having at least one active pharmaceutical ingredient) or other health care products) or industrial product formulations, particularly formulations for use as a personal care or home care product. Examples include, without limitation, household products and cleaners, fabric detergents, dish detergents, cleansers, soaps, bubble baths, disinfectants, deodorizers, pharmaceutical products, cosmetics, hygiene compositions, infant care products, antimicrobial soaps, hand sanitizers, deodorants, antiperspirants, anti-microbial coatings, wound care compositions, dermatological compositions, skin conditioners, skin moisturizers, anti-wrinkle formulations, sunscreens, tanning lotions, hair products, shampoos, shower gels, bubble baths, conditioners, shaving creams, etc. Depending on the application, the product formulation may contain numerous and different compatible ingredients. In many embodiments, the product formulation comprises an antimicrobial effective amount of the antimicrobial composition of the present disclosure and one or more additional ingredients suitable for use in a personal care (e.g., cosmetic), home care, health care, or industrial product formulation, particularly a personal care or home care formulation.

In one aspect, an aqueous product formulation comprises an antimicrobial effective amount of the antimicrobial composition of the present disclosure. Preferably, the aqueous product formulation is a personal care (e.g., cosmetic), home care, health care, or industrial product formulation, particularly a personal care or home care formulation.

The aqueous product formulation may have a pH, for example, of from about 3 to about 10, preferably from about 3.5 to about 7.5, more preferably from about 5.0 to about 7.5.

In a further aspect of the present disclosure, a personal care or home care product formulation comprises an antimicrobial effective amount of the antimicrobial composition of the present disclosure and one or more additional ingredients suitable for use in a personal care or home care product formulation.

In general, the antimicrobial effective amount of the antimicrobial composition in the product formulation ranges from about 0.1 wt% to about 3 wt%, preferably from about 0.3 wt% to about 2 wt%, more preferably from about 0.3 wt% or from about 0.5 wt% to about 1.5 wt% or to about 1.0 wt%.

In general, the antimicrobial effective amount of the antimicrobial composition provides from about 0.05 wt%, preferably from about 0.1 wt%, more preferably from about 0.2 wt% or from about 0.3 wt% to about 1.5 wt%, preferably to about 1.2 wt%, or more preferably to about 1.0 wt% or to about 0.8 wt%, of the alkylhydroxamic acid and/or salt thereof (a) and the fatty acid and/or salt thereof (b) combined in the product formulation.

In a further aspect, a method of controlling microbial growth in or preserving a product formulation comprises adding to the product formulation an antimicrobial effective amount of the antimicrobial composition of the present disclosure. The antimicrobial composition preferably controls gram positive bacteria, gram negative bacteria, and fungi, among other microorganisms. Non-limiting examples include *Staphylococcus aureus, Staphylococcus epidermidis, Pseudomonas aeruginosa, Escherichia coli, Enterobacter gergoviae, Klebsiella pneumoniae, Burholderia cepacia, Pseudomonas putida, Candida albicans, Aspergillus brasiliensis,* and mixtures thereof.

As a particular example, the product formulation may be any number and variety of different personal care products, such as cosmetic products. The personal care formulation may be, for example, any formulation for skin care, hair care, cosmetics, personal cleaning, hygiene, sun protection and other personal care applications. Examples of such products include, without limitation, skin toners, skin cleansers, night creams, skin creams, shaving creams, skin lotions, makeup, mascara, lipstick, blush, gloss, eye-liner, makeup removers, sunscreens, lip balms, fragrances, massage oils, shampoos, conditioners, hair styling gels, hair reparatives, hair tonics, hair fixatives, hair mousses, bath and shower gels, liquid soaps, moisturizing sprays, bath additives, ophthalmic preparations, foaming soaps and body washes, liquids for any personal care wet wipe application, etc.

Depending on the application, the personal care product formulation may contain numerous and different compatible ingredients. A personal care formulation may contain, for example, any of solvents, surfactants, emulsifiers, chelating agents, oxidizing agents, colorants, rheology modifiers, conditioners, emollients, skin care ingredients, moisturizers, thickeners, humectants, fillers, antioxidants, active ingredients, such as dermatologically active ingredients typically suited for topical application, fragrances, etc.

As a further example, the product formulation may be any number and variety of different home care products, such as fabric care products and cleaning products. Examples include dish soaps, laundry detergents, cleaning wipes, cleaning formulations and other home care applications.

Depending on the application, the home care product formulation may contain, for example, any of cleaning agents, detergents, emulsifiers, surfactants, thickeners, gelling agents, bleaches, whiteners, deodorizers, enzymes, stabilizers, fragrances, soil-release agents, anti-shrinking agents, anti-wrinkle agents, anti-spotting agents, antioxidants, UV absorbing compounds, anti-corrosion agents, anti-static agents, ironing aids, odor-preventing compounds, etc.

Examples of the foregoing ingredients and other agents used in personal care and home care product compositions are known in the art.

The product formulations of the present disclosure may be of a variety of different forms, for example, liquids, pastes, serums, hydrogels, creams, emulsions, lotions, gels, oils, wipes, ointments, semi-solid compositions, foams and aerosol sprays. The product formulations may be leave-on or rinse-off formulations. The product formulations may be hair care products, such as shampoos, hair conditioners, hair dyes, hair tonic, hair gel, hair dressings, hair grooming aids and other hair care preparations; products for shaving applications such as shaving cream, aftershave lotions, and other shaving applications; personal cleaners for the body and hands, such as liquid bath soaps and detergents; fragrance preparations, such as perfumes, after bath splashes, and other similar fragrant preparations, skin care products, such as moisturizers, creams, and lotions and other similar skin care products, make-up products, such as mascara, base foundations and the like; make-up removal products, sun care products, indoor tanning products and other similar personal care products. The product formulations may be liquids used to saturate wipes for personal cleaning and hygiene, for example baby wipes, wet toilet wipes, make-up removal wipes and exfoliating wipes the like, or wet wipe formulations for home care.

The product formulations may further comprise one or more traditional preservatives (in particular, e.g., phenoxyethanol, benzyl alcohol, benzoic acid and/or a salt of benzoic acid, such as sodium benzoate), but preferably in an amount no greater than 0.8 wt%, more preferably no greater than 0.6 wt% or 0.5 wt%, most preferably no greater than 0.4 wt%. Preferably, the product formulation is free or substantially free of parabens. Preferably, the product formulation is free or substantially free of formaldehyde donors. Preferably, the product formulation is free or substantially free of isothiazolinones. Preferably, the product formulation is free or substantially free of iodopropynyl butyl carbamate (IPBC). Preferably, the product formulation is free or substantially free of phenoxyethanol. Preferably, the product formulation is free or substantially free of benzyl alcohol. Preferably, the product formulation is free or substantially free of benzoic acid and salts thereof, such as sodium benzoate. Preferably, the product formulation is free or substantially free of parabens, formaldehyde donors, isothiazolinones, IPBC, phenoxyethanol, benzyl alcohol and benzoic acid and salts of benzoic acid (such as sodium benzoate).

As used herein, the articles "a", "an", and "the" preceding an element or component of the invention are intended to be nonrestrictive regarding the number of instances (i.e., occurrences) of the element or component. Therefore "a", "an", and "the" should be read to include one or at least one, and the singular word form of the element or component also includes the plural unless the number is obviously meant to be singular.

As used herein, the term "comprising" means the presence of the stated features, integers, steps, or components and does not preclude the presence or addition of one or more other features, integers, steps, components or groups thereof. That is, the stated features, integers, steps, or components may include other features, integers, steps, components or groups thereof. The term "comprising" is intended to include embodiments encompassed by the terms "consisting essentially of" and "consisting of," unless the context dictates otherwise.

The phrase "consisting of" limits the scope to which the phrase applies to the stated elements, steps, or ingredients, precluding the inclusion of other elements or materials, except for impurities ordinarily associated therewith. For example, in the context of the fatty acids of the present disclosure, such impurities may include, for example, unsaturation, branching, and/or varying chain lengths above or below the stated ranges for chain-length.

The phrase "consisting essentially of" limits the scope to which the phrase applies to the stated elements, steps, or ingredients and those that do not materially affect the basic and novel characteristic(s) of the claimed invention. "Consisting essentially of" occupies a middle ground between a closed scope that is written in a "consisting of" format and an open scope that is written in a "comprising" format.

As used herein, the term "about" modifying the quantity of an ingredient employed refers to variation in the numerical quantity that can occur, for example, through typical measuring and handling procedures used for making concentrates or use solutions in the real world; through inadvertent error in these procedures; through differences in the manufacture, source, or purity of the ingredients employed to make the compositions or carry out the methods; and the like.

Where present, all ranges are inclusive and combinable. For example, when a range of "1 to 5" is recited, the recited range should be construed as including ranges "1 to 4", "1 to 3", "1-2", "1-2 & 4-5", "1-3 & 5", and the like.

When a parameter is given either as a range, preferred range, or a list of upper values and lower values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range.

### EXAMPLES

The preservative activity in representative rinse-off and leave-on formulations was evaluated using a modification of the Personal Care Products Council (PCPC - formerly the Cosmetic, Toiletry and Fragrance Association) protocol (Machtiger, et al. 2001. Determination of the Efficacy of Preservation of Non-Eye Area Water Miscible Cosmetic and Toiletry Formulations: Collaborative Study. J of AOAC International. 84:1, 101-109)

This evaluation was conducted using a four week, two-cycle microbial preservative efficacy test (i.e., challenge test) at 25°C to determine the preservative efficacy of each treatment. Representative antimicrobial compositions of the present disclosure as provided in the Examples 1 and 2 below were tested in comparison to phenoxyethanol in a personal care formulation. The compositions were dosed and mixed thoroughly at room temperature into the personal care formulation of Table 1. The pH of the final formulation was readjusted to match the pH of the original formulation prior to dosing using a sodium hydroxide solution.

Table 1 shows an exemplary xanthan-gum-based serum. The serum formulation was made by adding all of the listed ingredients into a beaker and mixing with an overhead mixer and heating to 75-80 °C. The mixture was homogenized and cooled to room temperature. The pH was adjusted with a sodium hydroxide solution to pH ~5.5.

**Table 1. Representative Serum Composition with Xanthan Gum**

| **Ingredients** | **INCI Name** | **WT %** |
|---|---|---|
| Water | Water | 82.40 |
| Xanthan gum | Xanthan gum | 0.20 |
| Aristoflex AVC | Ammonium acryloyldimethyltaurate/ vinylpyrrolidone copolymer | 0.20 |
| Hyaluronic acid | Hyaluronic acid | 0.15 |
| Propylene glycol | Propylene glycol | 4.00 |
| Glycerin | Glycerin | 5.00 |
| Disodium EDTA | Disodium EDTA | 0.05 |
| Genencare OSMS Pro | Aqua (water), betaine, proline, inositol, serine | 3.00 |
| Cremophor RH 40 | PEG-40 Hydrogenated Castor oil | 3.00 |
| XIAMETER PMX-200 Silicone Fluid 100 cSt | Dimethicone | 2.00 |

After dosing, the samples were divided into two separate five gram aliquots. One aliquot was inoculated with 50 µl of a diluted bacterial pool, and the second aliquot was inoculated with 50 µl of a diluted fungal pool, as described below. Unpreserved product samples were included as a growth control.

A mixed bacterial inoculum was prepared using 24-hour cultures of the test bacteria (Table 2) grown in trypticase soy broth (TSB). Equal volumes of the bacterial test strains were combined and diluted one to ten in phosphate buffer to obtain an inoculum of approximately 5 x 10⁷ to 5 x 10⁸ colony forming units per ml (cfu/ml). The test samples were inoculated with 1% of the mixed bacterial inoculum. A mixed fungal inoculum was prepared using cell suspensions of the yeast *Candida albicans* ATCC # 10231 and the mold *Aspergillus brasiliensis* ATCC #16404 in phosphate buffer. Equal volumes of the fungal test strains were combined and diluted one to ten with phosphate buffer to obtain an inoculum of approximately 5 x 10⁶ to 5 x 10⁷ cfu/ml. The test samples were inoculated with 1% of the mixed fungal inoculum.

**Table 2. Mixed Bacterial Inoculum**

| **Microorganism** | **ATCC Number** | **Type** |
|---|---|---|
| *Burkholderia cepacia* | 25416 | Gram-Negative Non-fermenter |
| *Enterobacter gergoviae* | 33028 | Gram-Negative Fermenter |
| *Escherichia coli* | 8739 | Gram-Negative Fermenter |
| *Klebsiella pneumoniae* | 13883 | Gram-Negative Fermenter |
| *Pseudomonas aeruginosa* | 9027 | Gram-Negative Non-fermenter |
| *Pseudomonas aeruginosa* | 15442 | Gram-Negative Non-fermenter |
| *Pseudomonas putida* | 49128 | Gram-Negative Non-fermenter |
| *Staphylococcus aureus* | 6538 | Gram-Positive |
| *Staphylococcus epidermidis* | 12228 | Gram-Positive |

The samples were subjected to three microbial challenges at time zero, and inoculated a second and third time after seven and fourteen days, respectively. The number of microorganisms added to each sample was determined by a standard Most Probable Number (MPN) determination in Trypticase Soy Broth (TSB) for bacteria and Potato Dextrose Broth (PDB) for fungi. Samples were incubated at 25 °C for the test duration of four weeks. Samples were monitored for bacterial and fungal contamination after 2, 7, 14, 21, and 28 days. Samples challenged with bacteria were streak-plated onto Trypticase Soy Agar (TSA) and incubated at 30°C for 24 hours. Samples challenged with fungi were streak-plated onto Potato Dextrose Agar (PDA) and incubated at 25°C for 7 days. After incubation, plates were given a Growth Rating to determine the colony forming units per gram (CFU/g) present in each test sample at the testing time point. Table 3 represents the growth scoring system.

**Table 3. Growth score used to determine CFU/mL in test samples.**

| **Growth Rating** | **Description of Microbial Growth** | **Plating Results** | **Approximate cfu/g** |
|---|---|---|---|
| 0 | No contamination | No detectable growth | < 10 |
| 1 | Trace contamination | 1 to 9 colonies | 1 x 10¹ to 9 x 10¹ |
| 2 | Light contamination | 10 to 99 colonies | 1 x 10² to 9.9 x 10² |
| 3 | Moderate contamination | 100 to 1,000 colonies | 1 x 10³ to 9.9 x 10³ |
| 4 | Heavy contamination | > 1,000 or smear | > 1 x 10⁴ |

### Example 1

A series of antimicrobial compositions containing caprylic acid, caprylhydroxamic acid, a solvent, and an alkaline stabilizer (aqueous solution of potassium hydroxide) were prepared according to the amounts shown in Table 4. Caprylic acid, caprylhydroxamic acid, and hexylene glycol solvent were first mixed to form a homogenous clear solution. Potassium hydroxide (KOH) was added to water to form an alkaline solution as the alkaline stabilizer. The alkaline solution was then slowly added to the homogenous clear solution to produce the antimicrobial compositions (Samples 1-3).

**Table 4.**

| Composition | Caprylic acid | Caprylhydroxamic acid | Hexylene glycol | KOH/water (30/70 w/w) |
|---|---|---|---|---|
| Sample 1 | 45 wt% | 10 wt% | 30 wt% | 15 wt% |
| Sample 2 | 40 wt% | 10 wt% | 40 wt% | 10 wt% |
| Sample 3 | 45 wt% | 5 wt% | 40 wt% | 10 wt% |

Each of Samples 1-3 was dosed alone in separate samples of the serum formulation made according to Table 1 above. Serum formulations according to the Table 1 were also dosed respectively with phenoxyethanol (POE), a combination of POE and hydroxyacetophenone (HAP), a combination of POE and ethylhexylglycerin, and a combination of HAP and 1,2-hexanediol. All the dosed serum formulations were adjusted to the same pH value of 5.5. As shown in Table 5, the serum formulations dosed with phenoxyethanol alone at 0.4%, 0.6%, and 0.8% did not show significant efficacy in controlling microbial growth in the challenge testing, particularly against bacteria. The benchmark comparisons of POE + HAP (tested at both 0.6% combined and 0.8% combined), HAP + 1,2 hexanediol (tested at both 0.6% combined and 0.8% combined), and POE + ethylhexylglycerin (tested at both 0.8% combined and 1.0% combined) also struggled to control microbial growth in the challenge testing, particularly against bacteria. The serum formulations dosed with the respective Samples 1-3 alone surprisingly showed superior antimicrobial efficacy compared to phenoxyethanol alone, as well as compared to each of the tested benchmark combinations, at the same total dosing levels.

**Table 5. Challenge test data - xanthan gum based serum formulation.**

| | Bacteria growth rating | | Fungi growth rating | |
|---|---|---|---|---|
| Sample and Dosing (wt%) | D21 | D28 | D21 | D28 |
| Serum Blank | 4 | 4 | 4 | 4 |
| Phenoxyethanol (POE) (0.4%) | 4 | 4 | 3 | 3 |
| POE (0.6%) | 4 | 4 | 3 | 1 |
| POE (0.8%) | 4 | 4 | 2 | 0 |
| POE (0.3%) + hydroxyacetophenone (HAP) (0.3%) | 4 | 4 | 0 | 0 |
| POE (0.4%) + HAP (0.4%) | 4 | 3 | 0 | 0 |
| HAP (0.3%) + 1,2 hexanediol (0.3%) | 4 | 4 | 3 | 3 |
| HAP (0.4%) + 1,2 hexanediol (0.4%) | 4 | 3 | 0 | 0 |
| POE/ethylhexylglycerin (90/10 w/w) (0.8%) | 4 | 3 | 2 | 0 |
| POE/ethylhexylglycerin (90/10 w/w) (1.0%) | 4 | 3 | 1 | 0 |
| Sample 1 (0.8%) | 1 | 0 | 0 | 0 |
| Sample 1 (1.0 %) | 0 | 0 | 0 | 0 |
| Sample 2 (0.8%) | 1 | 0 | 0 | 0 |
| Sample 2 (1.0 %) | 0 | 0 | 0 | 0 |
| Sample 3 (0.8%) | 2 | 0 | 0 | 0 |
| Sample 3 (1.0 %) | 1 | 0 | 0 | 0 |

### Example 2

A series of antimicrobial compositions containing caprylic acid, caprylhydroxamic acid, a solvent, and water or an alkaline stabilizer (an aqueous solution of potassium hydroxide) were prepared according to the amounts shown in Table 6. Caprylic acid, caprylhydroxamic acid, and the solvent were first mixed to form a homogenous clear solution. Potassium hydroxide (KOH) was added to water to form an alkaline solution as the alkaline stabilizer. The alkaline solution or water alone was then slowly added to the homogenous clear solution to produce the antimicrobial compositions (Samples 4-7 in Table 6).

**Table 6.**

| Composition | Caprylic acid | Caprylhydroxamic acid | Solvent | Water or alkaline stabilizer |
|---|---|---|---|---|
| Sample 4 | 45 wt% | 10 wt% | Propylene glycol 30 wt% | KOH/water (30/70 w/w) 15 wt% |
| Sample 5 | 45 wt% | 10 wt% | Pentylene Glycol 30 wt% | KOH/water (30/70 w/w) 15 wt% |
| Sample 6 | 45 wt% | 10 wt% | 1,2-hexanediol 30 wt% | KOH/water (30/70 w/w) 15 wt% |
| Sample 7 | 45 wt% | 10 wt% | Pentylene Glycol 30 wt% | Water only 15 wt% |

Each of Samples 4-7 was dosed alone in separate samples of the serum formulation made according to Table 1 above. Serum formulations according to the Table 1 were also dosed respectively with phenoxyethanol (POE) alone and a combination of POE and each of the respective Samples 4-7. All the dosed serum formulations were adjusted to the same pH value of 5.5. As shown in Table 7, the serum formulations dosed with phenoxyethanol alone at 0.4% and 0.8% did not show significant efficacy in controlling microbial growth in the challenge testing, particularly against bacteria. The serum formulations dosed with the respective Samples 4-7 alone surprisingly showed superior antimicrobial efficacy compared to phenoxyethanol alone at the same total dosing levels. When the serum formulations were formulated with both phenoxyethanol (at a reduced concentration of 0.4%) and the respective Samples 4-7 (at 0.6 %), the Samples 4-7 improved the antimicrobial efficacy of phenoxyethanol, and the serum formulations were robustly protected from microbial contamination despite the low concentration of preservative (phenoxyethanol).

**Table 7. Challenge test data - xanthan gum based serum formulation.**

| | Bacteria growth rating | | Fungi growth rating | |
|---|---|---|---|---|
| Sample and Dosing (wt%) | D21 | D28 | D21 | D28 |
| Serum Blank | 4 | 4 | 4 | 4 |
| Phenoxyethanol (POE) (0.4%) | 4 | 4 | 3 | 3 |
| POE (0.8%) | 4 | 4 | 2 | 0 |
| Sample 4 (0.8 %) | 2 | 0 | 0 | 0 |
| Sample 5 (0.8%) | 1 | 0 | 0 | 0 |
| Sample 6 (0.8%) | 1 | 0 | 0 | 0 |
| Sample 7 (0.8%) | 1 | 0 | 0 | 0 |
| POE (0.4%) + Sample 4 (0.6%) | 0 | 0 | 0 | 0 |
| POE (0.4%) + Sample 5 (0.6%) | 0 | 0 | 0 | 0 |
| POE (0.4%) + Sample 6 (0.6%) | 0 | 0 | 0 | 0 |
| POE (0.4%) + Sample 7 (0.6%) | 0 | 0 | 0 | 0 |

## Claims

1. An antimicrobial composition comprising
(a) from about 2 to about 15 wt% of at least one alkylhydroxamic acid and/or a salt thereof;
(b) from about 20 to about 70 wt% of at least one saturated straight-chain fatty acid having a carbon chain length of from 6 to 12 carbon atoms and/or a salt thereof;
(c) from about 20 to about 70 wt% of at least one solvent; and optionally
(d) from 0 to about 20 wt% of water or at least one alkaline stabilizer.

2. The antimicrobial composition of claim 1, wherein the at least one fatty acid is caprylic acid and/or a salt thereof, pelargonic acid and/or a salt thereof, capric acid and/or a salt thereof, or any combination thereof.

3. The antimicrobial composition of claim 1 or 2, wherein the at least one alkylhydroxamic acid and/or a salt thereof contains an alkyl group having a carbon chain length of from 6 to 12 carbon atoms.

4. The antimicrobial composition of any preceding claim, wherein the at least one alkylhydroxamic acid and/or a salt thereof is hexanohydroxamic acid and/or a salt thereof, caprylhydroxamic acid and/or a salt thereof, decanohydroxamic acid and/or a salt thereof, laurohydroxamic acid and/or a salt thereof, or any combination thereof.

5. The antimicrobial composition of any preceding claim, wherein the at least one alkylhydroxamic acid and/or a salt thereof is caprylhydroxamic acid and/or a salt thereof.

6. The antimicrobial composition of any preceding claim, wherein the at least one solvent is chosen from alcohols, ethers, esters or combinations thereof, preferably wherein the at least one solvent is chosen from diols, glyceryl ethers, glyceryl esters or combinations thereof, more preferably wherein the at least one solvent is chosen from C₃ to C₈ diols.

7. The antimicrobial composition of any preceding claim, wherein the antimicrobial composition is free or substantially free of parabens, formaldehyde donors, isothiazolinones, iodopropynyl butyl carbamate (IPBC), phenoxyethanol, benzyl alcohol, and benzoic acid and salts of benzoic acid.

8. The antimicrobial composition of any preceding claim, wherein the antimicrobial composition comprises from about 2 to about 20 wt% of the at least one alkaline stabilizer, wherein the antimicrobial composition has a pH of from about 5.0 to about 7.5.

9. The antimicrobial composition of claim 8, wherein the at least one alkaline stabilizer comprises a base chosen from a metal hydroxide, oxide, carbonate, bicarbonate, phosphate, or hydride, an amine base or a combination thereof.

10. The antimicrobial composition of claim 9, wherein the base is chosen from sodium hydroxide, potassium hydroxide or a combination thereof.

11. The antimicrobial composition of any one of claims 8-10, wherein the at least one alkaline stabilizer is an alkaline aqueous solution.

12. A method of preparing the antimicrobial composition according to any one of claims 1-7, comprising combining (a) the least one alkylhydroxamic acid and/or salt thereof in an amount of from about 2 to about 15 wt%; (b) the at least one saturated straight-chain fatty acid having a carbon chain length of from 6 to 12 carbon atoms and/or a salt thereof in an amount of from about 20 to about 70 wt%; (c) the at least one solvent in an amount of from about 20 to about 70 wt%; and optionally (d) water or at least one alkaline stabilizer in an amount of from 0 to about 20 wt%.

13. A method of preparing the antimicrobial composition according to any one of claims 8-10, comprising combining (a) the least one alkylhydroxamic acid and/or salt thereof in an amount of from about 2 to about 15 wt%; (b) the at least one saturated straight-chain fatty acid having a carbon chain length of from 6 to 12 carbon atoms and/or a salt thereof in an amount of from about 20 to about 70 wt%; (c) the at least one solvent in an amount of from about 20 to about 70 wt%; and (d) the at least one alkaline stabilizer (d) in an amount of from about 2 to about 20 wt%, wherein the antimicrobial composition has a pH of from about 5.0 to about 7.5.

14. An aqueous product formulation comprising an antimicrobial effective amount of the antimicrobial composition according to any one of claims 1-11, preferably wherein the aqueous product formulation is a personal care product formulation or a home care product formulation.

15. A method of controlling microbial growth in or preserving a product formulation, comprising adding to the product formulation an antimicrobial effective amount of the antimicrobial composition according to any one of claims 1-11.
